Europäisches Patentamt

European Patent Office

Office européen des brevets

(19)

(11) Numéro de publication: **0 010 996**
**B1**

(12)

# FASCICULE DE BREVET EUROPEEN

(45) Date de publication du fascicule de brevet: **04.11.81**

(51) Int. Cl.³: **F 16 J 15/36** //D06F37/00

(21) Numéro de dépôt: **79400599.1**

(22) Date de dépôt: **30.08.79**

(54) Dispositif d'étanchéité entre une partie fixe et un arbre tournant.

(30) Priorité: **14.09.78 FR 7826491**

(43) Date de publication de la demande:
**14.05.80 Bulletin 80/10**

(45) Mention de la délivrance du brevet:
**04.11.81 Bulletin 81/44**

(84) Etats Contractants Désignés:
**BE DE GB IT LU NL**

(56) Documents cités:
**FR - A - 923 534**
**US - A - 2 992 843**
**US - A - 3 977 685**

(73) Titulaire: **SOCIETE INTERNATIONALE DE MECANIQUE INDUSTRIELLE S.A.**
**37 rue Notre-Dame**
**Luxembourg (LU)**

(72) Inventeur: **Menager, Jean**
**1, rue Glesener**
**Luxembourg (LU)**

(74) Mandataire: **Hagel, Francis et al,**
**Cabinet Robert Bloch 39, avenue de Friedland**
**F-75008 Paris (FR)**

Courier Press, Leamington Spa, England.

Dispositif d'étanchéité entre une partie fixe et un arbre tournant

La présente invention concerne un dispositif pour assurer l'étanchéité entre une partie fixe et un arbre tournant, du type comprenant un anneau de frottement lié à une membrane élastique fixée sur l'arbre, et rappelé par un ressort en contact avec une contre-bague fixée à la partie fixe, l'anneau de frottement comportant un prolongement axial entourant la membrane élastique. Plus particulièrement, l'invention concerne un dispositif de ce type destiné à être utilisé dans le cas où le liquide à étancher est chargé de matières solides et en particulier fibreuses.

De façon classique dans les dispositifs de ce type, la partie de l'anneau de frottement adjacente à la contre-bague est de diamètre réduit et se raccorde au reste du dispositif par un épaulement, ce qui définit, avec la contre-bague, une cavité. Lorsque le liquide à étancher est chargé de matières solides, en particulier fibreuses, ces matières peuvent s'accumuler dans cette cavité et risquent de pénétrer dans la zone de séparation entre l'anneau de frottement et la contre-bague en détériorant le dispositif.

En outre, lorsque le ressort est placé à l'intérieur de la membrane — ce qui est préférable pour éviter que les matières présentes dans le liquide ne finissent par bloquer axialement les spires — l'anneau de frottement est mal centré, ce qui amène des fuites en fonctionnement, et ce d'autant plus que la vitesse de rotation de l'arbre est plus élevée.

L'invention vise un dispositif d'étanchéité du type précité, dans lequel il n'existe plus de risque que des produits solides présents dans le liquide s'accumulent au voisinage des faces frottantes et détériorent le dispositif.

Selon l'invention, dans un dispositif du type indiqué, l'anneau de frottement présente une surface extérieure lisse qui se resserre dans la direction opposée à la face de contact.

Grâce à cet agencement, les produits présents dans le liquide sont ainsi empêchés de s'accumuler autour de l'anneau de frottement.

Le dispositif d'étanchéité selon l'invention sera utilisé avantageusement lorsque le liquide à étancher est chargé de produits fibreux qui peuvent s'enrouler autour de l'anneau de frottement. C'est notamment le cas dans les machines à laver le linge, le liquide étant alors chargé de matières textiles telles que des fils ou de la bourre de linge, et dans les malaxeurs.

L'invention sera bien comprise à la lecture de la description suivante, faite en référence au dessin annexé, dans lequel:

— la figure 1 représente en coupe un dispositif d'étanchéité selon l'invention monté dans une machine à laver le linge, et

— la figure 2 représente une variante de réalisation.

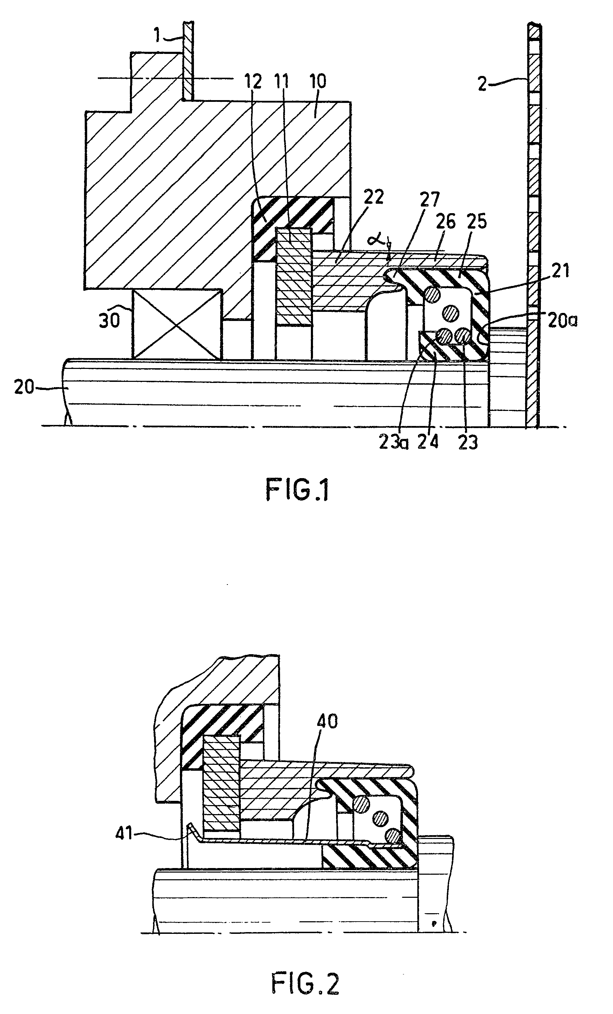

On a représenté sur la figure 1 une partie fixe ou carter 10 fixé à la cuve 1 d'une machine à laver le linge, et un arbre tournant 20 supporté en rotation dans le carter 10 par l'intermédiaire d'un roulement 30 et qui entraîne le tambour perforé 2 de la machine à laver.

Le dispositif d'étanchéité représenté sert à empêcher le liquide présent entre le tambour et la cuve de pénétrer dans le roulement 30 et de le détériorer. Ce dispositif comprend tout d'abord une partie fixe composée d'une contre-bague 11 en matière de frottement, fixée au carter 10 par l'intermédiaire d'un élément 12 en élastomère. Il comprend, d'autre part, une partie tournante liée à l'arbre 20, composée d'une membrane 21 en matière élastomère, d'un anneau de frottement 22 fixé à la membrane 21 et d'un ressort tronconique 23 qui rappelle l'anneau de frottement 22 en contact avec la contre-bague 11, l'étanchéité étant assurée par le contact entre les faces frottantes de la contre-bague 11 et de l'anneau 22.

La membrane 21 présente en section transversale sensiblement la forme d'un C. Elle comporte une portion intérieure 24 serrée sur l'arbre 20 et en butée contre un épaulement 20a de l'arbre 20. On notera en outre que le ressort 23 comprend une spire supplémentaire 23a jointive à la spire en contact avec la portion 24, et assure ainsi le serrage radial de la portion 24 sur l'arbre 20, en plus de la poussée axiale sur l'anneau 22 nécessaire à l'obtention de l'étanchéité.

La portion extérieure 25 de la membrane est entourée par un prolongement axial 26 de l'anneau de frottement, et se termine par une protubérance 27 qui est montée dans une gorge de forme correspondante formée dans l'anneau de frottement.

Cette disposition garantit un centrage parfait de l'anneau 22 par rapport à l'arbre 20, quelle que soit la position axiale de l'anneau.

L'assemblage de la protubérance 27 dans la gorge précitée, qui aboutit à un léger serrage, est réalisé sous vide. Ainsi, lorsque les éléments sont de nouveau soumis à la pression atmosphérique, il se produit une très forte adhérence entre eux qui donne le même résultat qu'un collage de la membrane 21 dans l'anneau 22.

La surface extérieure de l'anneau 22 est lisse sur toute sa longueur et présente dans l'exemple représenté une légère conicité, d'angle $\alpha$ inférieur à 5°. Cet agencement évite de créer une cavité dans laquelle des fils ou autres produits textiles pourraient s'enrouler et, de plus, la légère inclinaison de l'anneau 22 en direction du tambour permet de ramener en arrière les matières textiles susceptibles de s'enrouler autour de l'anneau 22.

La figure 2 montre une variante par rapport à la réalisation de la figure 1, dans laquelle il est prévu un collier métallique 40 pour le serrage radial de la portion 24 de la membrane, muni d'un épanouissement 41 au-delà de la contre-bague. Ceci permet de donner une structure unitaire au dispositif, car l'épanouissement 41 retient la contre-bague avant le montage du dispositif. Dans cette variante, il n'est pas nécessaire que le ressort comporte une spire supplémentaire pour le serrage de la membrane élastique.

## Revendications

1. Dispositif pour assurer l'étanchéité entre une partie fixe (10) et un arbre tournant (20), du type comprenant un anneau de frottement (22) lié à une membrane élastique (21) fixée sur l'arbre (20) et rappelé par un ressort (23) en contact avec une contre-bague (11) fixée à la partie fixe (10), l'anneau de frottement (22) comportant un prolongement axial (26) entourant la membrane élastique (21), caractérisé par le fait que l'anneau de frottement (22) présente une surface extérieure lisse qui se resserre dans la direction opposée à la face de contact.

2. Dispositif selon la revendication 1, dans lequel la surface extérieure de l'anneau de frottement (22) présente une conicité inférieure à 5°.

3. Dispositif selon l'une des revendications 1 et 2, dans lequel, pour réaliser la liaison entre l'anneau de frottement (22) et la membrane élastique (21), la membrane comprend une protubérance annulaire (27) serrée dans un évidement correspondant formé dans l'anneau de frottement (22), l'assemblage étant effectué sous vide.

## Claims

1. A fluid seal assembly to be mounted between a fixed part (10) and a rotary shaft (20), comprising a slide ring (22) secured to a resilient sealing member (21) attached to the shaft (20) and urged by a spring (23) into engagement with a counter-ring (11) secured to the fixed part (10), said slide ring (22) having an axial extension (26) embracing the resilient sealing member (21), characterized by the fact that the slide ring (22) has a smooth external surface which tapers inwardly in the direction remote from the sliding surface thereof.

2. A seal assembly according to Claim 1, wherein the external surface of the slide ring (22) has a conicity less than 5°.

3. A seal assembly according to one of the claims 1 and 2, wherein, in order to connect the slide ring (22) and the resilient sealing member (21), said sealing member has an annular projection (27) clamped in a corresponding recess formed in the slide ring (21), the mounting being carried out in vacuo.

## Patentansprüche

1. Vorrichtung zum Sichern der Dichtheit zwischen einem festen Teil (10) und einer drehenden Achse (20), welche Vorrichtung mit einem Reibungsring (22) versehen ist, der mit einem elastischen Membran (21) verbunden ist, das an der Achse (20) befestigt ist und der mittels eines Feders (23) gegen einen Gegenring (11), der am festen Teil (10) befestigt ist, gedruckt wird, wobei der Reibungsring (22) mit einem axialen Verlängerungsstück (26), das das elastische Membran (21) umgibt, versehen ist, dadurch gekennzeichnet, dass der Reibungsring (22) eine glatte Aussenoberfläche aufweist, die in der Richtung ab der Kontaktfläche einen kleiner werdenden Durchmesser aufweist.

2. Vorrichtung nach dem Anspruch 1, dadurch gekennzeichnet, dass die Aussenoberfläche des Reibungsringes (22) eine Konizität aufweist, die kleiner ist als 5°.

3. Vorrichtung nach dem Anspruch 1 oder 2, dadurch gekennzeichnet, dass zum Realisieren der Verbindung zwischen dem Reibungsring (22) und dem elastischen Membran (21), das Membran mit einem ringförmigen Vorsprung (22), der in einer entsprechenden Höhlung, die in der Reibungsring (22) gebildet ist, geklemmt ist, versehen ist, wobei die Anordnung im Vakuum zustandegebracht worden ist.

FIG.1

FIG.2